# EUROPÄISCHE PATENTSCHRIFT

(11) **EP 1 791 884 B1**
(45) Veröffentlichungstag und Bekanntmachung des Hinweises auf die Patenterteilung: **10.08.2011**
(21) Anmeldenummer: 05782572.1
(22) Anmeldetag: 09.09.2005
(51) Int. Cl.: C08G 18/67

(54) **FUNKTIONALISIERTE POLYMERE BZW. HAFTKLEBEMASSEN**
FUNCTIONALISED POLYMERS OR CONTACT ADHESIVE MASSES
POLYMERES FONCTIONNALISES OU MATIERES AUTO-ADHESIVES

(30) Priorität: 09.09.2004 DE 102004044084; 09.09.2004 DE 102004044087
(43) Veröffentlichungstag der Anmeldung: 06.06.2007
(73) Patentinhaber: TESA SE, 20253 Hamburg (DE)
(72) Erfinder: DOLLASE, Thilo, 22397 Hamburg (DE); KOOP, Matthias, 22848 Norderstedt (DE)
(86) Internationale Anmeldenummer: PCT/EP2005/054504
(87) Internationale Veröffentlichungsnummer: WO 2006/027385

(56) Entgegenhaltungen:
- EP-A- 0 528 304

## Beschreibung

Die Erfindung betrifft ein funktionalisiertes Polymer bzw. eine Haftklebemasse, die zumindest ein funktionalisiertes Polymer oder Blockpolymer umfasst, sowie deren Verwendung bei einem Selbstklebeband. Das funktionalisierte Polymer oder Blockpolymer weist eine spezifische Form der Molmassenverteilung auf.

In vielfältigen Anwendungen werden niedrigviskose Fluide benötigt, die sich leicht auf beliebige Oberflächen aufbringen lassen und anschließend durch Aufbau des Molekulargewichts zu Schichten mit je nach Anwendung unterschiedlichen Eigenschaften konvertiert werden können. Als wichtige Anwendungen solcher Systeme sind insbesondere Lacke und Klebstoffe zu nennen. Eine besondere Form von Klebstoffen sind dabei Haftklebstoffe, die sich durch permanente Klebrigkeit auszeichnen.

Als Ausgangsverbindungen für organische Oberflächenschichten werden häufig niedermolekulare oder oligomere Systeme eingesetzt, die mit zumindest zwei reaktiven Gruppen, über die im Aushärtungsprozess ein Molekulargewichtsaufbau realisiert wird, ausgestattet sind. Typische Vertreter sind thermisch härtbare Epoxid- und strahlenhärtbare Acrylharze. Die reaktiven Gruppen sind dabei Oxirane bzw. ungesättigte Acrylat- oder Methacrylatgruppen. Da der Abstand zwischen zwei benachbarten reaktiven Gruppen in den niedermolekularen oder oligomeren Ausgangsverbindungen naturgemäß gering ist, entstehen im Aushärtungsprozess im allgemeinen Duromere, also Netzwerke mit sehr hoher Netzpunktdichte. Für einige Anwendungen ist es jedoch gewünscht, dass die mechanischen Eigenschaften der herzustellenden Oberflächenschicht nicht denen der Duromere entspricht, sondern eher denen von Elastomeren, also Netzwerken mit geringerer Netzpunktdichte. Zu diesen Anwendungen zählt auch der Bereich der Haftklebemassen. Um den Aufbau solcher Netzwerke zu erreichen, die als Haftklebemassen verwendet werden können, müssen Ausgangsverbindungen gewählt werden, in denen die reaktiven Gruppen einen größeren Abstand zueinander haben, für gute Verarbeitungseigenschaften aber noch eine ausreichend geringe Viskosität. Hierfür eignen sich bevorzugt funktionalisierte Polymere mit geringem Polymerisationsgrad.

Den konzeptionell einfachsten Ansatz für entsprechende Ausgangsverbindungen stellen telechele Polymere dar. Unter dieser Bezeichnung werden lineare Polymere verstanden, die an beiden Kettenenden eine funktionelle Gruppe tragen. Sind die funktionellen Gruppen in ihrer Chemie so gewählt, dass sie mit einem Vernetzer reagieren können, dann ist die freie Netzbogenlänge im resultierenden Netzwerk durch den Polymerisationsgrad des telechelen Ausgangspolymers definiert. In der Literatur sind eine Reihe verschiedenartiger telecheler Polymere sowie ihre Anwendungen beschrieben [O. Nuyken, S. Pask in "Encyclopedia of Polymer Science and Engineering, H. F. Mark, N. M. Bikales, C. G. Overberger, G. M. Menges (Hrsg.), 2. Aufl., 1985, Wiley, New York, Bd. 16, S. 494ff]. Eine wichtige Anwendung telecheler Polymere stellt das Gebiet der Polyurethane dar [G. W. Becker, D. Braun (Hrsg.), Kunststoff Handbuch, Bd. 7, Polyurethane, 3. Aufl., 1993, C. Hanser, München]. Hier werden beispielsweise hydroxygruppenfunktionalisierte Oligomere mit Diisocyanaten umgesetzt, so dass über Kettenverlängerung thermoplastische Elastomere erhalten werden. Auf dem Gebiet der Polyurethane beschränkt man sich im allgemeinen auf solche Ausgangspolymere, die über eine Polykondensationsreaktion (wie z. B. Polyether und Polyester) oder anionische Polymerisation (wie z. B. Polydiene und hydrierte Polydiene) gewonnen werden, da hier aus polymerisationstechnischen Gründen eine Endfunktionalisierung auf günstige Weise möglich ist. Polymere, die über radikalische Polymerisation hergestellt werden, erlauben dagegen keine entsprechend einfache Funktionalisierung beider Kettenenden. Sind Polymere dieser Art als Ausgangspolymere gewünscht, kann man sich kontrolliertradikalischer Polymerisationsmethoden bedienen, bei denen die Funktionalisierung bereits im Kontrollreagenz enthalten ist (siehe beispielsweise EP 237 792 der Fa. Akzo). Für solche funktionalisierten Reglermoleküle sind allerdings hohe Kosten zu erwarten, die sich, durch den geringen Polymerisationsgrad bedingt, direkt auf die Kosten des funktionalisierten Polymers auswirken.

Eine andere einfache Möglichkeit, funktionalisierte Polymere herzustellen, die insbesondere für radikalisch polymerisierbare Systeme realisierbar ist, stellt die Verwendung funktioneller Comonomere beim Aufbau der Polymere dar. Zwar ist in diesen Materialien der Funktionalisierungsgrad nicht so gut definiert wie in telechelen Systemen, jedoch ist dies auch nicht in jedem Fall erforderlich. Wichtig für die Ausgangspolymere ist eine gute Beschichtbarkeit, die sich durch die Schmelzviskosität bei Verarbeitungstemperatur zeigt. Da diese signifikant vom Polymerisationsgrad abhängt, werden vorzugsweise Ausgangspolymere geringer Molmasse und zum Teil Oligomere verwendet. Um vorteilhaftes Vernetzungsverhalten und gute Produkteigenschaften zu erzeugen, muss Sorge getragen werden, dass die kurzkettigen Ausgangspolymere möglichst vollständig funktionalisiert vorliegen. Jedoch ist ein maximaler Funktionalisierungsgrad gewünscht, da (a) außer der Möglichkeit der späteren Vernetzung keine weiteren Eigenschaften, insbesondere die durch die als Majoritätskomponente eingesetzten Comonomere geprägten dynamisch mechanischen bzw. rheologischen Eigenschaften, des Polymers verändert werden sollen und (b) eine komplette Umsetzung der funktionellen Gruppen während einer anschließenden Vernetzungsreaktion möglich ist, so dass eine latente Reaktionsfreudigkeit im Endprodukt wie beispielsweise ein Nachvernetzungspotenzial dieser reaktiven Gruppen ausgeschlossen wird aber ohne dass der Abstand zwischen benachbarten Netzpunkten zu dicht wird.

Ein durch klassische radikalische Polymerisation hergestelltes Copolymer zeichnet sich nicht nur wie alle synthetischen Polymere durch eine Verteilung auftretender Molmassen sondern auch, selbst für den seltenen Fall gleicher Copolymerisationsparameter für alle eingesetzten Monomere, durch eine Zusammensetzungsverteilung aus. Dies bedeutet, dass die exakte Zusammensetzung der Copolymere aus statistischen Gründen von Kette zu Kette variiert. Soll ein Copolymer aus einem Monomergemisch hergestellt werden, in dem eine Monomersorte, beispielsweise einer funktionalisierten Art, nur zu einem geringen Anteil enthalten ist, dann können einzelne Polymerketten gebildet werden, in die keine Monomere dieser funktionalisierten Art eingebaut werden. Je niedriger die mittlere Molmasse des Copolymers eingestellt wird, desto höher wird die Wahrscheinlichkeit, dass einzelne Ketten keine Funktionalisierung erhalten haben. Solche Ketten können bei einem späteren Vernetzungsschritt nicht in das entstehende Netzwerk integriert werden. Handelt es sich bei dem Copolymer um ein Material mit niedriger Erweichungstemperatur, wie es bei Haftklebemassen der Fall ist, dann bleiben diese unfunktionalisierten Polymerketten als migrierfähige Komponenten im Netzwerk zurück. Sie agieren dann als Weichmacher und sind potentiell in der Lage, sich an Oberflächen anzureichern.

Eine weitere Problematik bei der Copolymerisation ergibt sich durch einen möglicherweise auftretenden Unterschied in den Copolymerisationsparametem der eingesetzten Comonomere, die u. a. von der chemischen Natur der Comonomere abhängen [J. Brandrup, E. H. Immergut, E. A. Grulke (Hrsg.), Polymer Handbook, 4. Aufl., 1999, Wiley, New York]. Da sich funktionalisierte Monomere von unfunktionalisierten vor allem in dieser Hinsicht unterscheiden, muss dieser Aspekt beim Aufbau von funktionalisierten Copolymeren häufig beachtet werden. Als Beispiel sei ein binäres Monomergemisch angeführt. Weist das funktionalisierte Comonomer einen Copolymerisationsparameter auf, der deutlich größer als 1 ist, und das unfunktionalisierte einen, der deutlich kleiner als 1 ist, was in der Kombination von 2-Hydroxyethylmethacrylat als funktionalisiertern Comonomer und n-Butylacrylat als unfunktionalisiertem Comonomer der Fall ist, dann wird 2-Hydroxyethylmethacrylat bevorzugt in die Polymerkette eingebaut und verbraucht. In Ketten, die erst gegen Ende der Polymerisation gebildet werden, kann dann kein 2-Hydroxyethylmethacrylat mehr eingebaut werden, so dass diese Ketten unfunktionalisiert bleiben. Als Versuch, Copolymere mit enger Zusammensetzungsverteilung herzustellen, werden in der Literatur Dosierungstechniken beschrieben [siehe beispielsweise I. N. Askill, D. K. Gilding, Polymer, 1981, 22, 342]. Diese als Semibatch-Verfahren bekannte Technik muss jedoch für jedes Comonomergemisch optimiert werden und erfordert einen mit einem Dosierungssystem ausgestatteten Reaktor [A. Echte, Handbuch der technischen Polymerchemie, 1993, Wiley-VCH, Weinheim].

Eine wichtige Grundlage für Materialien, die in Oberflächenschichten, sei es als Lacke oder sei es als Haftklebemassen, zur Anwendung kommen, stellen (Meth)acrylatcopolymere dar. Dies liegt darin begründet, dass die Eigenschaften dieser Art Copolymere durch die Wahl der eingesetzten Comonomere eingestellt werden können, wozu eine breite Palette verschiedenartiger Acrylat- und Methacrylat-Comonomere als Ausgangsstoffen zur Verfügung stehen. Je nach Wahl und Anteil der eingesetzten Comonomere können beispielsweise die mechanischen Eigenschaften oder die Polarität der resultierenden Copolymere gesteuert werden. (Meth)acrylatcopolymere zeichnen sich ferner durch gute Beständigkeit gegenüber Temperatur, UV-Strahlung und Oxidation aus, weswegen sie sich besonders für Anwendungen eignen, in denen Witterungsbeständigkeit gefordert wird. Zur Funktionalisierung von (Meth)acrylatcopolymeren bietet sich die statistischen Funktionalisierung durch Verwendung funktionalisierter Comonomere besonders an, da sie durch einen radikalischen Polymerisationsprozess hergestellt werden. Unter (Meth)acrylatcopolymeren seien im Sinne dieser Erfindung solche Copolymere verstanden, die hauptsächlich aus Acrylatmonomeren und/oder Methacrylatmonomeren aufgebaut werden.

Verfahren zur Herstellung von kurzkettigen (Meth)acrylatcopolymeren als Ausgangspolymere für Oberflächenschichten, sogenannte Acrylharze oder Acrylatharze, sind aus der Literatur bekannt. DE 26 35 177 der BASF AG beschreibt Acrylatharze, die aus einem Comonomergemisch mit 10 - 35 Gew.% α,β-olefinisch ungesättigte Carbonsäuren zur Einführung funktioneller Gruppen enthalten und ohne Anwesenheit von Reglern bei über 160 °C polymerisiert werden. Die Polydispersität dieser Acrylatharze wird mit 2,5 angegeben. US 5,082,922 der Valspar Corp. beschreibt die Derivatisierung von Acrylharzen, die aus einem Comonomergemisch mit mindestens 5 % eines ethylenisch ungesättigten Comonomers, das Hydroxy- oder Carbonsäuregruppen als funktionelle Gruppen enthält, durch radikalische Polymerisation gewonnen wird. DE 22 40 312 der Ford Werke AG beschreibt vernetzbare Methacrylatharze, die durch radikalische Polymerisation erhalten werden und durch Verwendung von 8 bis 30 % Glycidylmethacrylat als funktionalisiertes Comonomer gewonnen wird.

Für die klassische radikalische Polymerisation liegt die erreichbare Polydispersität, gegeben durch den Quotienten aus Gewichtsmittel und Zahlenmittel der Molekulargewichtsverteilung des erzeugten Polymers, im Idealfall für ausschließlichen Disproportionierungsabbruch bei 1,5 und im Idealfall für ausschließlichen Kombinationsabbruch bei 2,0. Durch Kettenübertragungen sind durch klassische radikalische Polymerisation gewonnene Polymere aber eher breiter verteilt. Diese Verteilung von Molmassen führt nicht nur zu einer Verbreiterung im Bereich des hochmolekularen Anteils sondern auch im Bereich des niedermolekularen Anteils. Die Bildung eines hohen Anteils an niedermolekularen Komponenten während der Polymerisation kann sich entsprechend des obengesagten alleine aus statistischen Gründen als nachteilig für den Einbau solcher Monomere, die zu geringem Anteil im Monomergemisch vorliegen, erweisen.

JP 10226714 A beschreibt Copolymere, die (Meth)acrylate enthalten und eine enge monomodale Molmassenverteilung aufweisen. Die offenbarten Copolymere werden mittels anionischer Polymerisation hergestellt. Aus diesem Grund ist es erforderlich, reaktive und insbesondere säurehaltige Comonomere vor der Polymerisation in unreaktivere Gruppen umzuwandeln. Enthält das Comonomergemisch eine säurehaltige Komponente, so ist eine erfolgreiche anionische Polymerisation nicht möglich. Säurehaltige Copolymere werden durch Verwendung silylgeschützer Comonomere erhalten, die nach beendeter Polymerisation in einem zusätzlichen Schritt entschützt werden müssen. Die vorgeschlagenen Copolymere sind als Resistmaterial für ArF-Excimerlaser vorgesehen.

DE 43 24 801 offenbart (Meth)acrylat-Copolymere, die OH-Gruppen enthalten und gewichtsmittlere Molmassen aufweisen, die unter 8600 g/mol liegen. Die beschriebenen Copolymere werden durch radikalische Polymerisation hergestellt und sollen eine enge monomodale Verteilung aufweisen. Die (Meth)acrylat-Copolymere sind für lacktechnische Anwendungen bestimmt.

DE 103 06 431 beschreibt ebenfalls (Meth)acrylat-Copolymere mit monomodaler Verteilung. Die (Meth)acrylat-Copolymere werden mittels radikalischer Polymerisation hergestellt und als in einer Emulsion dispergierte Partikel erhalten. Die Partikel sind für lacktechnische Anwendungen bestimmt.

Keine dieser Patentschriften beschreibt Polymere, die bei niedrigen Molmassen eine im Verhältnis dazu geringe Differenz zwischen Peakmolmasse und der kleinsten, an einer vorgegebenen Stelle ermittelten Molmasse aufweisen. Ferner beschreibt keine dieser Patentschriften Polymere mit enger Molmassenverteilung, die als Haftmittel eingesetzt werden sollen und deshalb einer Vernetzung unterzogen werden.

Haftmittelzusammensetzungen auf Basis von Poly(meth)acrylaten sind u.a. aus DE 100 30 217 und DE 102 12 899 bekannt. Die Polymere werden beispielsweise mittels aktinischer Strahlung vernetzt. Die in DE 100 30 217 beschriebenen Haftklebemassen weisen eine gewichtsmittlere Molmasse von mindestens 250.000 g/mol auf. Keine dieser Haftklebemassen umfasst Polymere, die bei niedrigen Molmassen eine im Verhältnis dazu geringe Differenz zwischen Peakmolmasse und der kleinsten, an einer vorgegebenen Stelle ermittelten Molmasse aufweisen.

DE 42 20 807 offenbart ein Lackbindemittel auf der Basis von Vinypolymerisaten mit einem engen Molekulargewicht und einer breiten Molekulargewichtsverteilung. DE 41 27 513 offenbart Polyacrylatharze, die als Bindemittel geeignet sind. Das Polyacrylatharz kann ein hydroxyfunktionalisiertes Polyacrylat sein, das eine bimodale Verteilung aufweist. Es werden keine Polymere beschrieben, aus denen sich ein Hinweis auf die vorteilhaften Molmasseverteilungen der Erfindung ergeben.

Aufgabe der Erfindung ist es, die Nachteile nach dem Stand der Technik zu beseitigen. Es sollen insbesondere ein funktionalisiertes Polymer bzw. eine Haftklebemasse angegeben werden, die auf Basis funktionalisierter Copolymere mit geringem Molekulargewicht und reduziertem Anteil an nichtfunktionalisierten Ketten über ein radikalisches Polymerisationsverfahren vorzugsweise im Batchbetrieb hergestellt werden kann.

Diese Aufgabe wird durch die Merkmale der Ansprüche 1, 2, 8, 12 und 13 gelöst. Zweckmäßige Ausgestaltungen der Erfindungen ergeben sich aus den Merkmalen der Ansprüche 3 bis 7 sowie 9 und 10.

Nach Maßgabe der Erfindung ist eine Haftklebemasse vorgesehen, die zumindest ein funktionalisiertes Polymer umfaßt, wobei das funktionalisierte Polymer ein Gewichtsmittel der Molmassenverteilung zwischen 5 000 g/mol und 200 000 g/mol, bevorzugt zwischen 10 000 g/mol und 100 000 g/mol und eine Differenz zwischen Mₚ und Mₘᵢₙ kleiner als 25 000 g/mol, bevorzugt kleiner als 15 000 g/mol ist, aufweist, wobei
(a) Mₚ die Peakmolmasse eines monomodalen Polymers oder die Peakmolmasse der kleinsten Mode in einem bimodalen oder multimodalen Polymer ist,
(b) Mₘᵢₙ die kleinste in der Molmassenverteilung auftretende Molmasse ist, definiert an derjenigen Stelle, an der die Summenhäufigkeit der Molmassenverteilung einen Wert von 0,05 hat,
(c) das funktionalisierte Polymer von linearer, verzweigter oder sternförmiger Struktur ist,
(d) das funktionalisierte Polymer zumindest eine Sorte an Funktionalisierungen trägt, die zu einer späteren Vernetzung des funktionalisierten Polymers genutzt werden kann,
(e) zumindest 50 % der Polymerketten des funktionalisierten Polymers zumindest zwei Funktionalisierungen tragen,
(f) zumindest 75 % der Polymerketten des funktionalisierten Polymers zumindest eine Funktionalisierung tragen; und
(g) die zumindest eine Art an Funktionalisierung des funktionalisierten Polymers aus der Verwendung zumindest einer Sorte eines funktionalisierten Monomers bei der Herstellung des funktionalisierten Polymers resultiert.

Nach Maßgabe der Erfindung ist ferner eine Haftklebemasse vorgesehen, die zumindest ein funktionalisiertes Blockcopolymer umfasst, das ein Gewichtsmittel der Molmassenverteilung zwischen 5 000 g/mol und 200 000 g/mol, bevorzugt zwischen 10 000 g/mol und 100 000 g/mol aufweist und eine Differenz zwischen Mₚ und Mₘᵢₙ kleiner als 25 000 g/mol, bevorzugt kleiner als 15 000 g/mol ist, aufweist, wobei
(a) Mₚ die Peakmolmasse eines mortomodalen Blockcopolymers oder die Peakmolmasse der kleinsten Mode in einem bimodalen oder multimodalen Blockcopolymer ist,
(b) Mₘᵢₙ die kleinste in der Molmassenverteilung auftretende Molmasse ist, definiert an derjenigen Stelle, an der die Summenhäufigkeit der Molmassenverteilung einen Wert von 0,05 hat,
(c) das funktionalisierte Blockcopolymer von linearer, verzweigter, sternförmiger oder gepfropfter Struktur ist,
(d) zumindest ein Block des funktionalisierten Blockcopolymers zumindest eine Sorte an Funktionalisierungen trägt, die zu einer späteren Vernetzung des funktionalisierten Blockcopolymers genutzt werden kann,
(e) zumindest 50 % zumindest eines Blocks der Blockcopolymerketten des funktionalisierten Blockcopolymers zumindest zwei Funktionalisierungen tragen,
(f) zumindest 75 % zumindest eines Blocks der Blockcopolymerketten des funktionalisierten Blockcopolymers zumindest eine Funktionalisierung tragen,
(g) seine zumindest eine Art an Funktionalisierung des funktionalisierten Blockcopolymer aus der Verwendung zumindest einer Sorte eines funktionalisierten Monomers bei der Herstellung des funktionalisierten Blockcopolymers resultiert.

Die funktionalisierten Polymere und Blockcopolymere können beispielsweise durch ein kontrolliert-radikalisches Polymerisationsverfahren hergestellt werden.

Die funktionalisierten Polymere oder Blockpolymere sind in einer Ausführungsform funktionalisierte (Meth)acrylatcopolymere mit geringer Molmasse, die auf Grund des Herstellprozesses einen reduzierten Anteil nichtfunktionalisierter Ketten enthalten. Die erfindungsgemäßen funktionalisierten (Meth)acrylatcopolymere zeichnen sich durch eine besonders vorteilhafte Form der Molmassenverteilung an der Flanke niedriger Molmassen aus. Sie sind beispielsweise durch ein kontrolliert-radikalisches, quasilebend-radikalisches oder lebend-radikalisches Polymerisationsverfahren zugänglich.

Die Erfindung wird nachstehend unter Bezugnahme auf die Zeichnungen ausführlicher erläutert. Dabei zeigen
- Fig. 1: die Molmassenverteilung eines funktionalisierten Polymers gemäß Beispiel A, das für die erfindungsgemäße Haftmittelzusammensetzung geeignet ist; sowie
- Fig. 2: die Molmassenverteilung eines Vergleichsbeispiels.

### Zusammensetzung und Struktur der erfindungsgemäßen funktionalisierten Polymere

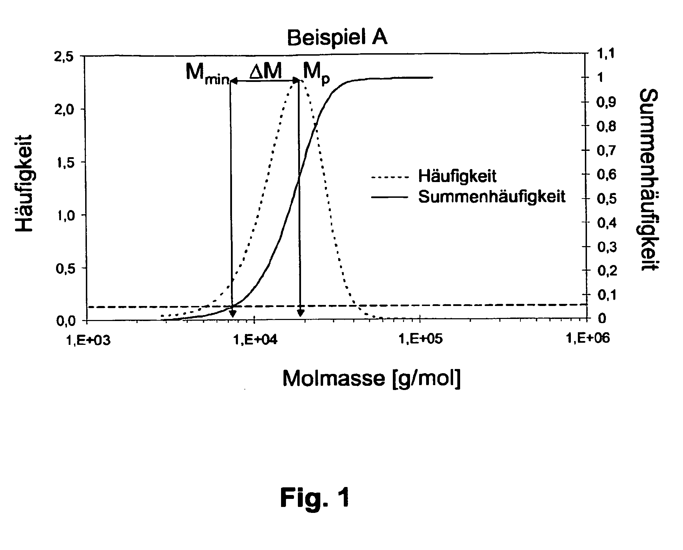

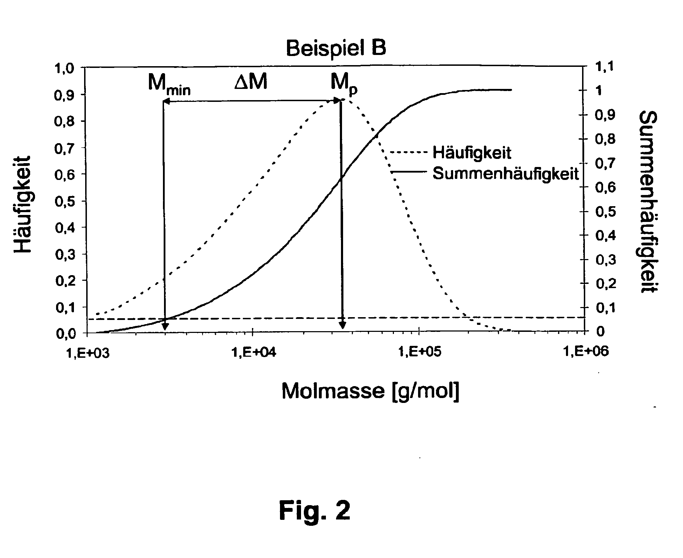

Überraschenderweise wurde gefunden, dass sich gegenüber dem Stand der Technik verbesserte funktionalisierte Polymere durch eine spezifische Form ihrer Molmassenverteilung auszeichnen. Erfindungsgemäß einsetzbare Polymere unterscheiden sich von anderen Polymeren im Hinblick auf ihre Molmassenverteilung insbesondere im Bereich unterhalb der Peakmolmasse Mₚ, also im niedermolekularen Bereich. Die typischerweise zur Beschreibung von Molmassenverteilungen herangezogene Polydispersität spiegelt jedoch durch die starke Gewichtung der höhermolekularen Fraktionen durch Verwendung des Gewichtsmittels vor allem den Bereich oberhalb der Peakmolmasse wieder. Es ist daher erforderlich, ein anderes Kriterium zu finden, das vor allem den niedermolekularen Anteil der Molmassenverteilung beschreibt. Als praktische Größen, die in diesem Sinne im Folgenden genutzt wird, erweist sich die Molmassendifferenz ΔM, die die Breite der Molmassenverteilung des niedermolekularen Anteils beschreibt. Sie ist als Differenz aus der Peakmolmasse und der kleinsten in der Molmassenverteilung auftretenden Molmasse Mₘᵢₙ definiert. Mₘᵢₙ, wird aus dem niedermolekularen Anteil der Molmassenverteilung an derjenigen Stelle bestimmt, an der die Summenhäufigkeit der Molmassenverteilung einen Wert von 0,05 hat (handelt es sich bei der Molmassenverteilung um eine kontinuierliche Funktion, dann wird statt der Summenhäufigkeit die integrale Häufigkeit zur Bestimmung von Mₘᵢₙ herangezogen, ebenfalls am Punkt 0,05. Ebenso wird in diesem Fall an allen anderen Stellen dieser Erfindung die Summenhäufigkeit durch die integrale Häufigkeit ausgetauscht). Dieser Wert ist willkürlich gewählt, bietet sich aber aus Auswertegründen als günstig an. Die wichtigsten Definitionen und Bedeutungen der hier verwendeten die Molmassenverteilung betreffenden Größen sind in Tabelle 1 zusammengestellt (siehe hierzu ergänzend auch Figur 1 und Figur 2).

Die erfindungsgemäßen funktionalisierten Polymere zeichnen sich dadurch aus, dass sie einen reduzierten niedermolekularen Anteil enthalten und zwar insoweit, dass der Parameter ΔM einen Wert unterhalb 25 000 g/mol, bevorzugt unterhalb 15 000 g/mol aufweist. Das Gewichtsmittel der Molmassenverteilung der erfindungsgemäß funktionalisierten Polymere liegt zwischen 5 000 g/mol und 200 000 g/mol, bevorzugt zwischen 10 000 g/mol und 100 000 g/mol.

**- Tabelle 1 -**

| **Größe/Begriff** | **Bedeutung/Definition im Sinne dieser Erfindung** |
|---|---|
| Mₙ | Zahlenmittel der Molmassenverteilung |
| M_{w} | Gewichtsmittel der Molmassenverteilung |
| Mₘᵢₙ | Molmasse, bei der die Summenhäufigkeitsdarstellung der Molmassenverteilung einen Wert von 0,05 hat |
| Mₚ | Molmasse, bei der die Molmassenverteilung ein Maximum aufweist |
| D | = M_{w}/Mₙ (Polydispersität) |
| ΔM | = Mₚ - Mₘᵢₙ (Anteil niedermolekularer Bestandteile in der Molmassenverteilung; Indiz für die Steilheit der Flanke der Molmassenverteilung bei kleinen Molmassen) |
| Häufigkeit | Menge einer Polymerfraktion mit einer bestimmten Molmasse |
| Summenhäufigkeit | Summenfunktion der diskreten Häufigkeitsdarstellung der Molmassenverteilung normiert auf den Wert 1 |
| niedermolekularer Anteil | = (Summenhäufigkeit am Punkt Mₚ) - (Summenhäufigkeit am Punkt Mₘᵢₙ) |
| hochmolekularer Anteil | = 1 - (Summenhäufigkeit am Punkt Mₚ) |
| monomodal | Attribut eines Polymers, dessen Elugramm durch eine einzige Molmassenverteilung beschrieben wird |
| bimodal | Attribut eines Polymers, dessen Elugramm durch eine Überlagerung von zwei Molmassenverteilungen beschrieben wird |
| multimodal | Attribut eines Polymers, dessen Elugramm durch eine Überlagerung einer Vielzahl von Molmassenverteilungen beschrieben wird |

Die erfindungsgemäßen funktionalisierten Polymere können eine monomodale, eine bimodale oder eine multimodale Molmassenverteilung aufweisen. Die obigen Ausführungen hinsichtlich der Beschaffenheit des niedermolekularen Anteils der erfindungsgemäßen funktionalisierten Polymere gelten für bimodale und multimodale Systeme ebenso wie für monomodale. Die Bestimmung der Größen Mₘᵢₙ erfolgt für monomodale, bimodale und multimodale Systeme analog. Entscheidend im Sinne dieser Erfindung zur Bestimmung von ΔM ist die Peakmolmasse der kleinsten vorkommenden Mode in einem bimodalen oder multimodalen System. Führt die Überlagerung verschiedener Moden zu einer ausgeprägten Verbreiterung von ΔM, nämlich zu Werten oberhalb 25 000 g/mol, dann sind solche Systeme nicht erfindungsgemäß und auch nicht vorteilhaft im Sinne dieser Erfindung einsetzbar.

Die erfindungsgemäßen funktionalisierten Polymere werden aus zumindest einer Sorte an unfunktionalisierten Monomeren und zumindest einer Sorte an funktionalisierten Monomeren hergestellt. Der Anteil der funktionalisierten Monomere im Monomergemisch, das zur Herstellung der erfindungsgemäßen funktionalisierten Polymere zur Polymerisation gebracht wird, liegt bei bis zu 20 %, bevorzugt bei bis zu 10 %, mehr bevorzugt bei bis zu 5 %. Zumindest 75 % der Polymerketten enthalten zumindest eine Funktionalisierung, zumindest 50 % der Polymerketten enthalten zumindest zwei Funktionalisierungen. Die Art der Funktionalisierung kann dabei gleicher oder verschiedener Art sein. Die erfindungsgemäßen funktionalisierten Polymere werden aus mindestens 50 %, bevorzugt mindestens 75 % α,β-ungesättigten Carbonylverbindungen hergestellt.

Die erfindungsgemäßen funktionalisierten Polymere weisen in einer bevorzugten Auslegung dieser Erfindung eine Erweichungstemperatur gegeben durch die Glasübergangstemperatur in amorphen Systemen und die Kristallitschmelztemperatur in semikristallinen Systemen unterhalb +25 °C auf und eine Schmelzviskosität gegeben als Nullviskosität bei +60 °C von kleiner 10 kPa s, bevorzugt von kleiner 1 kPa s, mehr bevorzugt von kleiner 0,1 kPa s auf.

Die erfindungsgemäßen funktionalisierten Polymere können von linearer, sternförmiger, verzweigter Struktur sein. Erfindungsgemäß sind ebenfalls lineare oder sternförmige Blockcopolymere oder Pfropfcopolymere, die zumindest einen Polymerblock bzw. zumindest ein Pfropfpolymer enthalten, für die die oben gemachten Angaben in Bezug auf Art und Zusammensetzung der zu Grunde liegenden funktionalisierten und unfunktionalisierten Monomere zutrifft und das gesamte Blockcopolymer bzw. Pfropfcopolymer die oben gemachten Angaben in Bezug auf die Molmassenverteilung, insbesondere bezüglich ΔHM und des Gewichtsmittels, und die Schmelzviskosität erfüllt.

Als Beispiele für zum Aufbau der erfindungsgemäßen funktionalisierten Polymere erfindungsgemäß einsetzbare unfunktionalisierte Monomere seien, ohne eine Einschränkung vornehmen zu wollen, unfunktionalisierte α,β-ungesättigte Ester der allgemeinen Struktur (I)

CH₂=CH(R¹)(COOR²) (I)

genannt, wobei R¹ = H oder CH₃ und R² = lineare, verzweigte oder ringförmige, gesättigte oder ungesättigte Alkylreste mit 1 bis 30, insbesondere mit 4 bis 18 Kohlenstoffatomen darstellt.

Unfunktionalisierte Monomere, die sehr bevorzugt im Sinne der allgemeinen Struktur (I) für die erfindungsgemäßen funktionalisierten Polymere eingesetzt werden, umfassen Acryl- und Methacrylsäureester mit Alkylgruppen bestehend aus 1 bis 30 C-Atomen, insbesondere 4 bis 18 C-Atomen. Spezifische Beispiele für entsprechende Verbindungen sind, ohne sich durch diese Aufzählung einschränken zu wollen, Methylacrylat, Ethylacrylat, n-Propylacrylat, n-Butylacrylat, n-Pentylacrylat, n-Hexylacrylat, n-Heptylacrylat, n-Octylacrylat, n-Nonylacrylat, Laurylacrylat, Stearylacrylat, deren verzweigte Isomere, wie z. B. 2-Ethylhexylacrylat und iso-Octylacrylat sowie cyclische Monomere wie z. B. Cyclohexyl- oder Norbornylacrylat und Isobornylacrylat sowie auch deren methacrylatische Analoga.

Ebenfalls einsetzbar als unfunktionalisierte Monomere für die erfindungsgemäßen funktionalisierten Polymere sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

Als Beispiele für zum Aufbau der erfindungsgemäßen funktionalisierten Polymere erfindungsgemäß einsetzbare funktionalisierte Monomere seien, ohne eine Einschränkung vornehmen zu wollen, funktionalisierte α,β-ungesättigte Ester der allgemeinen Struktur (II)

CH₂=CH(R¹)(CO0R³) (II)

genannt, wobei R¹ = H oder CH₃ und R³ = H oder lineare, verzweigte oder ringförmige, gesättigte oder ungesättigte Alkylreste mit 1 bis 30, insbesondere mit 4 bis 18 Kohlenstoffatomen darstellt und zumindest eine funktionelle Gruppe, die zumindest ein Atom beinhaltet, das von Kohlenstoff und Wasserstoff verschieden ist, enthält.

Funktionalisierte Monomere, die besonders vorteilhaft im Sinne dieser Erfindung eingesetzt werden können, sind, ohne Anspruch auf Vollständigkeit zu erheben, Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acrylsäure, Methacrylsäure, Itaconsäure, Crotonsäure, Methacrylamid, Acrylamid, N-Methylolmethacrylamid, N-Methylolacrylamid, Vinylalkohol, 2-Hydroxyethylvinylether, 3-Hydroxypropylvinylether, 4-Hydroxybutylvinylether, Maleinsäureanhydrid, Itaconsäureanhydrid.

### Herstellung der erfindungsgemäßen funktionalisierten Polymere

Zur Herstellung der erfindungsgemäßen funktionalisierten Polymere können beispielsweise alle kontrolliert, quasilebend oder lebend verlaufenden radikalischen Polymerisationsverfahren eingesetzt werden. Hierbei seien beispielsweise, ohne Anspruch auf Vollständigkeit zu besitzen, die ATRP (atom transfer radical polymerization), die NMRP (nitroxide mediated radical polymerization) oder der RAFT-Prozess (reversible addition and fragmentation chain transfer) genannt, also insbesondere solche Verfahren, die eine Kontrolle über die Molmassen und Molmassenverteilung der Polymerkette erlauben.

Die Herstellung der erfindungsgemäßen funktionalisierten Polymere über ein kontrolliert-radikalisches, quasilebend-radikalisches oder lebend-radikalisches Polymerisationsverfahren erfolgt in Gegenwart eines organischen Lösungsmittels oder in Gegenwart von Wasser oder in Gemischen aus organischen Lösungsmitteln und/oder organischer Lösungsmittel mit Wasser oder in Substanz. Bevorzugt wird so wenig Lösungsmittel wie möglich eingesetzt. Die Polymerisationszeit für erfindungsgemäß einsetzbare Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wässrigen Medien beziehungsweise Gemischen aus organischen und wässrigen Lösungsmitteln werden zur Polymerisation bevorzugt Emulgatoren und Stabilisatoren zugesetzt.

Als Polymerisationsinitiatoren werden vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide vom Typ (III) oder (IV) eingesetzt: 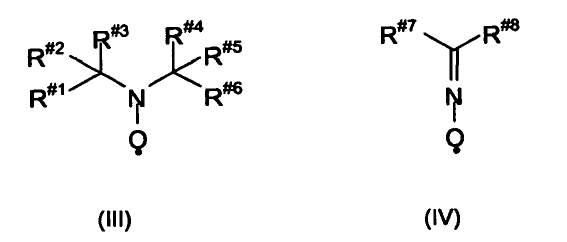 wobei R^{#1}, R^{#2}, R^{#3}, R^{#4}, R^{#5}, R^{#6}, R^{#7}, R^{#8} unabhängig voneinander folgende Verbindungen oder Atome bedeuten:
i) Halogenide, wie Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Estef -COOR^{#9} , Alkoxide -OR^{#10} und/oder Phosphonate -PO(OR^{#11})₂, wobei R^{#9}, R^{#10} und/oder R^{#11} für Reste aus der Gruppe ii) stehen.

Verbindungen der Struktur (III) oder (IV) können auch an Polymerketten jeglicher Art gebunden sein (vorrangig in dem Sinne, dass zumindest einer der oben genannten Reste eine derartige Polymerkette darstellt) und damit als Makroradikale oder Makroregler genutzt werden.

Mehr bevorzugt werden kontrollierte Regler für die Polymerisation von Verbindungen des Typs:
- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-pipe-ridinyloxyl

- N-tert.-Butyl-1-phenyl-2-methyl propyl Nitroxid
- N-tert.-Butyl-1-(2-naphtylyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl prcpyl)-diethylphosphono-1-methyl ethyl Nitroxid
- Di-t-Butylnitroxid
- Diphenylnitroxid
- t-Butyl-t-amyl Nitroxid

WO 98/13392 der Akzo Nobel N. V. beschreibt offenkettige Alkoxyaminverbindungen, die ein symmetrisches Substitutionsmuster aufweise. WO 96/24620 der Elf Atochem beschreibt ein Polymerisationsverfahren, bei dem sehr spezielle Radikalverbindungen wie z. B. phosphorhaltige Nitroxide, die auf Imidazolidin basieren, eingesetzt werden. WO 98/4.4008 der B. F. Goodrich Co. offenbart spezielle Nitroxyle, die auf Morpholinen, Piperazinonen und Piperazindionen basieren. DE 199 49 352 der Ciba beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast). Die in WO 98/13392, WO 96124620, WO 98/44008 und DE 199 49 352 beschriebenen Reglersysteme sowie deren Weiterentwicklungen können im Sinne dieser Erfindung eingesetzt werden.

Als weitere Polymerisationsmethode lässt sich in vorteilhafter Weise zur Synthese der erfindungsgemäßen funktionalisierten Polymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(9) Cu-, Ni-, Fe-, Pd-, Pt-, Ru-, Os-, Rh-, Co-, Ir-, Ag- oder Au-Komplexe (siehe beispielsweise der Schriften EP 824 111; EP 826 698; EP 824 110; EP 841 346; EP 850 957 der Elf Atochem) eingesetzt werden. Die unterschiedlichen Möglichkeiten der ATRP sind ferner in den Schriften US 5,945,491 und US 5,789,487 durch K. Matyjaszewski et al. beschrieben. Derartige Verfahren können im Sinne dieser Erfindung eingesetzt werden.

Als sehr bevorzugter Herstellprozess für die erfindungsgemäßen funktionalisierten Polymere wird eine Variante der RAFT-Polymerisation (reversible addition-fragmentation chain transfer) durchgeführt. Der Polymerisationsprozess ist z. B. in den Schriften WO 98/01478 und WO 99/31144 der Du Pont de Nemours Co. ausführlich beschrieben. Zur Herstellung der funktionalisierten Polymere eignen sich besonders vorteilhaft Trithiocarbonate der allgemeinen Struktur R"'-S-C(S)-S-R'" [R. T. A. Mayadunne, E. Rizzardo, J. Chiefari, J. Krstina, G. Moad, A. Postma, S. H. Thang, Macromolecules, 2000,. 33, 243]. In einer sehr vorteilhaften Variante werden beispielsweise Trithiocarbonat (V) oder die Thioverbindungen (VI) und (VII) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann oder ein gesättigter oder ungesättigter aliphatischer Rest sein kann. Der Phenylring Φ kann optional einen oder mehrere Polymerketten, beispielsweise Polybutadien, Polyisopren, Polychloropren, ein (Meth)acrylatcopolymer oder Polystyrol tragen, um nur einige zu nennen. Funktionalisierungen können beispielsweise Halogene, Hydroxygruppen, Epoxidgruppen, stickstoff-oder schwefelenthaltende Gruppen sein, ohne dass diese Liste Anspruch auf Vollständigkeit erhebt.

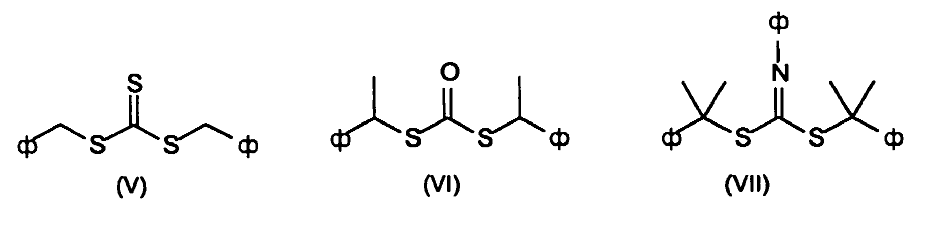

Außerdem können Thioester der allgemeinen Struktur

R^{$1}-C(S)S-R^{$2}

zum Einsatz kommen. Dabei können R^{$1} und R^{$2} unabhängig voneinander gewählt werden und wobei R^{$1} ein Rest aus einer der folgenden Gruppen i) bis iv) und R^{$2} ein

Rest aus einer der folgenden Gruppen i) bis iii) sein kann:
i) C₁- bis C₁₈-Alkyl, C₂- bis C₁₈-Alkenyl, C₂- bis C₁₈-Alkinyl, jeweils linear oder verzweigt; Aryl-, Phenyl-, Benzyl-, aliphatische und aromatische Heterozyklen.
ii) -NH₂, -NH-R^{$3}, -NR^{$3}R^{$4}, -NH-C(O)R^{$3}, -NR^{$3}-C(O)-R^{$4}, -NH-C(S)-R^{$3}, -NR^{$3}-C(S)-R^{$4}, 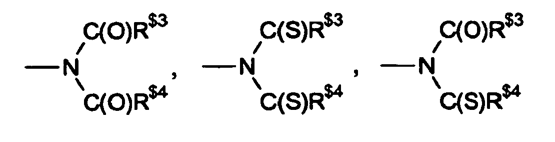 wobei R^{$3} und R^{$4} unabhängig voneinander gewählte Reste aus der Gruppe i) sind.
iii) -S-R^{$5}, -S-C(S)-R^{$5}, wobei R^{$5} ein Rest aus einer der Gruppen i) oder ii) sein kann.
iv) -O-R^{$6}, -O-C(O)-R^{$6}, wobei R^{$6} ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo-oder Peroxoinitiatoren. Prinzipiell eignen sich hierfür jedoch alle für (Meth)acrylate bekannten üblichen Initiatoren. Die Produktion von C-zentrierten Radikalen ist bei J. O. Metzger in Houben-Weyl: Methoden der Organischen Chemie, 4. Aufl., 1989, Bd. E19a, G. Thieme, Stuttgart beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seien hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclo-hexylnitril) (Vazo 88^{®}, DuPont^{®}) oder 2,2-Azo-bis-(2-methylbutannitril) (Vazo 67^{®}, DuPont^{®}) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert [WO 98/01478], um möglichst enge Molekulargewichtsverteilungen zu realisieren. Durch die geringen Umsätze lassen sich diese Polymere aber nicht als Beschichtungsmassen und insbesondere nicht als Haftklebemassen einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Oberflächenschichten ein sehr hohes Ausgasungsverhalten zeigen würden.

Das Lösemittel wird bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

### Verwendung der erfindungsgemäßen funktionalisierten Polymere,

Die erfindungsgemäßen funktionalisierten Polymere eigenen sich durch ihre niedrige Schmelzviskosität besonders als Ausgangssubstanzen für Oberflächenbeschichtungen.

Eine bevorzugte Verwendung der erfindungsgemäßen funktionalisierten Polymere ist ihre bevorzugt lösungsmittelfreie Beschichtung auf eine Oberfläche. Um gute Produkteigenschaften als Obertiächenschicht zu bieten, werden die erfindungsgemäßen funktionalisierten Polymere vernetzt. Die Vernetzungsreaktion wird günstigerweise thermisch und/oder durch aktinische Strahlung initiiert und nutzt die spezifische Chemie der in den funktionalisierten Polymeren enthaltenen funktionellen Gruppen. Die Vernetzungsreaktion kann dabei zwischen zwei funktionellen Gruppen direkt ablaufen oder auch in Verbindung mit einem Kopplungsadditiv, das zumindest eine funktionelle Gruppe enthält, das mit zumindest einer im erfindungsgemäßen funktionalisierten Polymer enthaltenen funktionellen Gruppe reagieren kann. Es ist ebenfalls möglich, mit Hilfe zumindest eines Kopplungsreagenzes eine Kettenverlängerung zu erzeugen. Da die erfindungsgemäßen funktionalisierten Polymere mehr als zwei funktionelle Gruppen tragen können, wird bei Umsetzung mit einem difunktionellen Kopplungsreagenzes Kettenverlängerung und Vernetzung stattfinden. Um die zur Kettenverlängerung und/oder Vernetzung führenden Reaktion in günstiger Weise ablaufen zu lassen, können optional Katalysatoren, Aktivatoren oder Initiatoren zugesetzt werden.

In einer besonders bevorzugten Verwendung dienen die erfindungsgemäßen funktionalisierten Polymere als Rohstoff, optional auch in Kombination mit anderen Rohstoffen, für Haftklebemassen. Sie finden dann in selbstklebenden Produkten wie insbesondere ein- oder doppelseitigen Selbstklebebändern Anwendung.

Es ist ebenfalls erfindungsgemäß, die erfindungsgemäßen funktionalisierten Polymere als Rohstoff, optional auch in Kombination mit anderen Rohstoffen, für Oberflächenlacke zu verwenden.

Die Erfindung wird nachstehend anhand eines Beispiels näher erläutert.

### Prüfmethoden

### Test 1 - Gelpermeationschromatographie (GPC):

Die Bestimmung des Gewichtsmittels der Molmassenverteilung M_{w}, der Polydispersität D, der Molmassendifferenz ΔM und der hierfür erforderlichen Größen Mₘᵢₙ und Mₚ erfolgte durch Gelpermeationschromatographie. Als Eluent wurde THF mit 0,1 Vol.-% Trifluoressigsäure eingesetzt. Die Messung erfolgte bei 23°C. Als Vorsäule wurde PSS-SDV, 10 µ, 10³ Å, ID 8.0 mm x 50 mm verwendet. Zur Auftrennung wurde die Säulenkombination PSS-SDV, 10 µ, linear-one mit ID 8.0 mm x 300 mm eingesetzt. Die Probenkonzentration betrug 1 g/l, die Durchflussmenge 0,5 ml pro Minute. Es wurde gegen Polystyrol-Standards gemessen.

### Test 2 - K-Wert:

Der K-Wert ist ein Maß für die mittlere Molekülgröße hochpolymerer Stoffe. Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

### Test 3 - Gelwert:

Die lösungsmittelfreien Haftklebernassenproben werden in ein Vliestütchen aus Polyethylen (Tyvek-Vlies) eingeschweißt. Lösliche Bestandteile werden mit Toluol über eine Dauer von drei Tagen unter täglichem Lösungsmittelaustausch extrahiert. Aus der Differenz der Probengewichte vor der Extraktion und nach der Extraktion wird der Gelwert als prozentuale Angabe des Gewichtsanteils des Polymers, das nicht mit Toluol extrahierbar ist, bestimmt.

### Test 4 - Klebkraft:

Die Prüfung der Schälfestigkeit (Klebkraft) erfolgte in Anlehnung an PSTC-1. Auf eine 25 µm dicke PET-Folie wird eine 50 µm dicke Haftklebeschicht aufgebracht. Ein 2 cm breiter Streifen dieses Musters wird auf eine geschliffene Stahlplatte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### Test 5 - Scherstandzeiten:

Die Prüfung erfolgte in Anlehnung an PSTC-7. Auf eine 25 µm dicke PET-Folie wird eine 50 µm dicke Haftklebeschicht aufgebracht. Ein 1,3 cm breiter Streifen dieses Musters wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (Temperatur und Luftfeuchtigkeit), aber ohne Last equilibriert. Dann wird das Testgewicht angehängt, so dass eine Scherbeanspruchung parallel zur Verklebungsfläche entsteht, und die Zeit gemessen, bis die Verklebung versagt. Ist eine Haltezeit von 10 000 min erreicht, so wird der Versuch vor Versagen der Klebbindung abgebrochen.

### Beispiele

*Beispiel A:* In einem für die radikalische Polymerisation konventionellen 2L-Stahlreaktor wurden unter Stickstoffatmosphäre 285 g 2-Ethylhexylacrylat, 285 g n-Butylacrylat, 30 g 2-Hydroxyethylmethacrylat, 400 g Aceton sowie 15,3 g Dibenzyltrithiocarbonat (Herstellung nach Vorschrift W. M. Albert, Synth. Commun., 1988, 18, 1531 unter Verwendung von Benzylbromid und Kohlenstoffdisulfid) vorgelegt. Der Reaktor wurde auf 58 °C innentemperatur aufgeheizt und das Monomergemisch mit 0,1 g Vazo 67^{®} (DuPont) initiiert. Nach 4 Stunden 40 Minuten wurde mit 0,1 g Vazo 67^{®} nachinitiiert. Die Temperatur betrug zu diesem Zeitpunkt 67 °C. Nach 24,5 Stunden wurde der Reaktor abgekühlt und die Polymerlösung abgelassen. Das Produkt wurde im Vakuumtrockenschrank vom Lösungsmittel befreit. GPC (Test 1) ergab Mₙ = 14 700 g/mol bei einer Polydispersität von 1,23. Der K-Wert (Test 2) lag bei 17,6.

*Vergleichsbeispiel B:* In einem für die radikalische Polymerisation konventionellen 2L-Stahlreaktor wurden unter Stickstoffatmosphäre 285 g 2-Ethylhexylacrylat, 285 g n-Butylacrylat, 30 g 2-Hydroxyethylmethacrylat und 400 g iso-Propanol vorgelegt. Der Reaktor wurde auf 58 °C Innentemperatur aufgeheizt und das Monomergemisch mit 0,1 g Vazo 67^{®} (DuPont) initiiert. Nach einer Stunde wurde mit 0,1 g Vazo 67^{®} nachinitiiert. Die Temperatur betrug zu diesem Zeitpunkt 89 °C. Nach 25 Stunden wurde der Reaktor abgekühlt und die Polymerlösung abgelassen. Das Produkt wurde im Vakuumtrockenschrank vom Lösungsmittel befreit. GPC (Test 1) ergab Mₙ = 11 400 g/mol bei einer Polydispersität von 3,05. Der K-Wert (Test 2) lag bei 23,8.

Die Beispielverbindungen wurden so in ihrer Art gewählt, dass sie im vernetzten Zustand potenziell als Haftklebemassen einsetzbar sind. Die nach den Beispielen A und B erhaltenen Produkte wurden zur Vernetzung mit Isophorondiisocyanat (Vestanat IPDI^{®}, Fa. Hüls) unter Verwendung von Coscat 83^{®} (Fa. C. H. Erbslöh) als Katalysator bei Raumtemperatur lösungsmittelfrei vermischt und unmittelbar anschließend mit einer Schichtdicke von 50 µm auf 25 µm dicke Polyesterfolie beschichtet (Beispiel A: 50 g Polymer A + 2,28 g Vestanat IPDI^{®} + 0,16 g Coscat 83^{®}; Beispiel B: 50 g Polymer B + 2,88 g Vestanat IPDI^{®} + 0,16 g Coscat 83^{®}). Die Netzwerkstrurktur wurde über eine Gelwertanalyse (Test 3, siehe Tabelle 2) beurteilt. Die beschichteten Muster wurden in Teststreifen geschnitten und die so erhaltenen Selbstklebebänder im Hinblick auf ihrer klebtechnischen Eigenschaften (Test 4 und Test 5, siehe Tabelle 2) untersucht.

Tabelle 2 zeigt deutlich den Unterschied im klebtechnischen Leistungsprofil von Beispiel

A und Beispiel B auf. Erfindungsgemäße funktionalisierte Polymere lassen sich in haftklebrige Materialien mit sehr guter Kohäsion umwandeln, während klassisch hergestellte Systeme für eine Verwendung in Selbstklebebändern ungeeignet sind. Diese Eigenschaftsunterschiede lassen sich durch eine veränderte Zusammensetzung aus vernetzten und unvernetzten Bestandteilen in der Haftklebemasse erklären. Auf diese Unterschiede soll im Folgenden kurz eingegangen werden, um die Vorteile der erfindungsgemäßen funktionalisierten Polymere bei der Verwendung als vernetztes Material in Oberflächenschichten deutlich zu machen.

**- Tabelle 2 -**

| | Beispiel A | Vergleichsbeispiel B |
|---|---|---|
| Test 1: GPC | Mₙ = 14 700 g/mol | Mₙ = 11 700 g/mol |
| | M_{w} = 18 000 g/mol | M_{w} = 34 900 g/mol |
| | Mₘₗₙ = 7 200 g/mol | Mₘᵢₙ = 2 900 g/mol |
| | Mₚ = 19 000 g/mol | Mₚ = 34 400 g/mol |
| | D = 1,23 | D = 3,05 |
| | ΔM = 11 800 g/mol | ΔM = 31 100 g/mol |
| Test 2: K-Wert des unvernetzten Materials | 17,6 | 23,8 |
| Test 3: Gelwert | 82,0 % | 65,2 % |
| Test 4: Klebkraft | 0,4 N/cm | < 0,1 N/cm (Schmierfilm verbleibt auf Substrat) |
| Test 5: Scherstandzeit | | |
| 1 kg, 23 °C | > 10 000 min | 17 min (af m. Schm.) |
| 1 kg, 40 °C | > 10 000 min | |
| 1 kg, 70 °C | > 10 000 min | |

| | | |
|---|---|---|
| (af m. Schm.: Adhäsionsbruch mit Schmierfilm auf Substrat) | | |

Zur genaueren Analyse des Zustands der vernetzten Materialien aus Beispiel A und Beispiel B wurden weitere Ansätze durchgeführt. Dabei wurden erneut die Einsatzverhältnisse der funktionalisierten Polymere, des Diisocyanats und des Katalysators für die Vernetzungsreaktion gewählt, wie oben angegeben. Die Gelwerte für die hier beschriebenen Ansätze unterscheiden sich leicht von den für die oben beschriebenen Ansätze gefundenen (Tabelle 2), was jedoch die grundsätzlichen Interpretationen des folgenden Teils nicht in ihrer Aussagekraft beeinflusst.

Das nach Beispiel B erhaltene Vergleichsprodukt weist im unvernetzten Zustand (Gelwert = 0 %, Test 3) einen K-Wert (Test 2) von 23,8 Einheiten auf. Die NMR-Analyse dieses Präpolymers ergab eine Polymerzusammensetzung, die dem Einbau von 47,2 Gew.-% n-Butylacrylat, 48,1 Gew.% 2-Ethylhexylacrylat und 4,7 Gew.% 2-Hydroxyethylmethacrylat entspricht. Durch die Umsetzung dieses Systems mit isophorondiisocyanat, kommt es zu einer Polymervernetzung. Das Polymernetzwerk weist danach einen Gelwert, also einen Massenanteil an unlöslichen Bestandteilen, von 73,6 % auf. Die übrigen 26,4 % der Probe lassen sich nicht mit in das Polymernetzwerk einbinden und stellen den löslichen Anteil dar. Die NMR-Analyse dieser löslichen Anteile zeigte eine Zusammensetzung, die dem Einbau von 50,2 Gew.% n-Butylacrylat und 49,8 Gew.% 2-Ethylhexylacrylat entspricht. Es wurden keine Hinweise auf Einbau von 2-Hydroxyethylmethacrylat in diese löslichen Bestandteile gefunden. Zur weiteren Analyse dieser löslichen Bestandteile wurde erneut der K-Wert (Test 2) bestimmt. Dieser lag mit 13,5 Einheiten *deutlich unter* dem Wert des nicht umgesetzten Präpolymers. Aufgrund der K-Wert-Differenz von 10,3 Einheiten und der Ergebnisse der NMR-Analyse lässt sich aussagen, dass es sich bei der nicht vernetzbaren Polymerkomponente um niedermolekulare Bestandteile mit einer unzureichenden OH-Funktionalisierung handelt. Der relativ hohe Anteil an unvernetzbaren, *niedermolekularen* Polymerketten, führt zu einem Massesystem mit mangelhafter Kohäsion, in dem die Polymere mit niedrigem Polymerisationsgrad als unerwünschter Weichmacher agieren, nach Verklebung an die Oberfläche migrieren und beim Wiederablösen einen Schmierfilm zurücklassen.

Ein nach Beispiel A erhaltenes erfindungsgemäß funktionalisiertes Polymer weist im unvernetzten Zustand einen Gelwert von 0 % (Test 3) und einen K-Wert (Test 2) von 17,6 Einheiten auf. Die NMR-Analyse dieses Präpolymers ergab eine Zusammensetzung, die dem Einbau von 43,7 Gew.% n-Butylacrylat, 50,5 Gew.% 2-Ethylhexylacrylat und 5,8 Gew.% 2-Hydroxyethylmethacrylat entspricht. Durch die Umsetzung dieses Systems mit Isophorondiisocyanat kommt es zur Vernetzung des funktionalisierten Polymers. Das Polymernetzwerk weist danach einen Gelwert von 82,0 % (Test 3) auf. Lediglich 18,0 % des Massesystems lassen sich nicht mit in das Polymernetzwerk einbinden, also gegenüber dem Vergleichsbeispiel ein deutlich reduzierter Anteil. Auch hier zeigte die NMR-Analyse der löslichen Bestandteile keine Hinweise auf den Einbau von 2-Hydroxyethylmethacrylat. Der K-Wert (Test 2) der löslichen Bestandteile lag mit 15,5 Einheiten nur *leicht unter* dem Wert des nicht umgesetzten Präpolymers. Aufgrund der geringen K-Wert-Differenz und der Ergebnisse der NMR-Analyse lässt sich aussagen, dass es sich bei den nicht vernetzbaren Polymerbestandteilen um unzureichend OHfunktionalisierte Bestandteile handelt, die nur leicht unterhalb des mittleren Molekulargewichtes des Präpolymers liegen. Diese nicht in das Polymernetzwerk eingebundenen Bestandteile führen zu keiner entscheidenden Beeinflussung der Kohäsion des Massesystems, so dass die vernetzten erfindungsgemäß funktionalisierten Polymere beispielsweise als Haftklebemassen vorteilhaft eingesetzt werden können.

## Patentansprüche

1. Hattklebemasse, erhältlich durch Vernetzung eines funktionalisierten Polymers, das ein Gewichtsmittel der Molmassenverteilung zwischen 5 000 g/mol und 200 000 g/mol aufweist und eine Differenz zwischen Mₚ und Mₘᵢₙ kleiner als 25 000 g/mol aufweist, wobei
(a) Mₚ die Peakmolmasse eines monomodalen Polymers oder die Peakmolmasse der kleinsten Mode in einem bimodalen oder multimodalen Polymer ist,
(b) Mₘᵢₙ die kleinste in der Molmassenverteilung auftretende Molmasse ist, definiert an derjenigen Stelle, an der die Summenhäufigkeit der Molmassenverteilung einen Wert von 0,05 hat,
(c) das funktionalisierte Polymer von linearer, verzweigter oder sternförmiger Struktur ist,
(d) das funktionalisierte Polymer zumindest eine Sorte an Funktionalisierungen trägt, die zu einer späteren Vernetzung des funktionalisierten Polymers genutzt werden kann,
(e) zumindest 50 % der Polymerketten des funktionalisierten Polymers zumindest zwei Funktionalisierungen tragen,
(f) zumindest 75 % der Polymerketten des funktionalisierten Polymers zumindest eine Funktionalisierung tragen; und
(g) die zumindest eine Art an Funktionalisierung des funktionalisierten Polymers aus der Verwendung zumindest einer Sorte eines funktionalisierten Monomers bei der Herstellung des funktionalisierten Polymers resultiert.

2. Haftklebemasse, erhältlich durch Vernetzung eines funktionalisierten Polymers-, das zumindest ein funktionalisiertes Blockcopolymer umfasst, wobei das Blockcopolymer ein Gewichtsmittel der Molmassenverteilung zwischen 5 000 g/mol und 200 000 g/mol aufweist und eine Differenz zwischen Mₚ und Mₘᵢₙ kleiner als 25 000 g/mol aufweist, wobei
(a) Mₚ die Peakmolmasse eines monomodalen Blockcopolymers oder die Peakmolmasse der kleinsten Mode in einem bimodalen oder multimodalen Blockcopolymer ist,
(b) Mₘᵢₙ die kleinste in der Molmassenverteilung auftretende Molmasse ist, definiert an derjenigen Stelle, an der die Summenhäufigkeit der Molmassenverteilung einen Wert von 0,05 hat,
(c) das funktionalisierte Blockcopolymer von linearer, verzweigter, sternförmiger oder gepfropfter Struktur ist,
(d) zumindest ein Block des funktionalisierten Blockcopolymers zumindest eine Sorte an Funktionalisierungen trägt, die zu einer späteren Vernetzung des funktionalisierten Blockcopolymers genutzt werden kann,
(e) zumindest 50 % zumindest eines Blocks der Blockcopolymerketten des funktionalisierten Blockcopolymers zumindest zwei Funktionalisierungen tragen,
(f) zumindest 75 % zumindest eines Blocks der Blockcopolymerketten des funktionalisierten Blockcopolymers zumindest eine Funktionalisierung tragen,
(g) die zumindest eine Art an Funktionalisierung des funktionalisierten Blockcopolymers aus der Verwendung zumindest einer Sorte eines funktionalisierten Monomers bei der Herstellung des funktionalisierten Blockcopolymers resultiert.

3. Haftklebemasse nach einem der Ansprüche 1 oder 2, **dadurch gekennzeichnet, dass** das Gewichtsmittel der Molmassenverteilung des funktionalisierten Polymers bzw. Blockcopolymers zwischen 10 000 g/mol und 100 000 g/mol aufweist.

4. Haftklebemasse nach einem der vorangehenden Ansprüche, **dadurch**
**gekennzeichnet, dass**
die Differenz zwischen Mₚ und Mₘᵢₙ kleiner als 15 000 g/mol ist.

5. Haftklebemasse nach zumindest einem der vorangehenden Ansprüche, **dadurch**
**gekennzeichnet, dass**
das funktionalisierte Polymer oder Blockcopolymer zu mehr als 50 %, bevorzugt mehr als 75 % aus (Meth)acrylatmonomeren hergestellt ist.

6. Haftklebemasse nach einem oder mehreren der vorangehenden Ansprüche, **dadurch**
**gekennzeichnet, dass**
das Monomergemisch, aus dem das funktionalisierte Polymer oder Blockcopolymer durch Polymerisation gewonnen wird, zu bis zu 20 %, bevorzugt zu bis zu 10 %, mehr bevorzugt zu bis zu 5 % zumindest eine Sorte eines funktionalisierten Monomers enthält.

7. Haftklebemasse nach einem oder mehreren der vorangehenden Ansprüche, **dadurch**
**gekennzeichnet, dass**
die unfunktionalisierten Monomere bei der Herstellung der funktionalisierten Polymere oder Blockcopolymere einer oder einer Kombination an unfunktionalisierten α,β-ungesättigten Estern der allgemeinen Struktur
CH₂=C(R¹)(COOR²)
entnommen sind, wobei R¹ = H oder CH₃ und R² = lineare, verzweigte oder ringförmige, gesättigte oder ungesättigte Alkylreste mit 1 bis 30, insbesondere mit 4 bis 18 Kohlenstoffatomen darstellt.

8. Haftklebemasse nach einem oder mehreren der vorangehenden Ansprüche, **dadurch**
**gekennzeichnet, dass** die funktionalisierten Monomere bei der Herstellung der funktionalisierten Polymere oder Blockcopolymere einer oder einer Kombination an unfunktionalisierten α,β-ungesättigten Estern der allgemeinen Struktur
CH₂=C(R¹)(COOR³)
entnommen sind, wobei R¹ = H oder CH₃ und R³ = H oder lineare, verzweigte oder ringförmige, gesättigte oder ungesättigte Alkylreste mit 1 bis 30, insbesondere mit 4 bis 18 Kohlenstoffatomen darstellt und zumindest eine funktionelle Gruppe, die zumindest ein Atom beinhaltet, das von Kohlenstoff und Wasserstoff verschieden ist, enthält.

9. Haftklebemasse nach Anspruch 8, **dadurch gekennzeichnet, dass** die funktionalisierten Monomere bei der Herstellung der funktionalisierten Polymere oder Blockcopolymere einer oder einer Kombination an funktionalisierten α,β-ungesättigten Carbonylverbindungen der Gruppe, bestehend aus Acrylsäure, Methacrylsäure, 2-Hydroxyethylacrylat, 2-Hydroxyethylmethacrylat, 3-Hydroxypropylacrylat, 3-Hydroxypropylmethacrylat, 4-Hydroxybutylacrylat, 4-Hydroxybutylmethacrylat, Itaconsäure, Crotonsäure, Acrylamid, Methacrylamid, N-Methylolacrylamid, N-Methylolmethacrylamid, Glycidylacrylat, Glycidylmethacrylat, Vinylalkohol, 2-Hydroxyethylvinylether, 3-Hydroxypropylvinylether, 4-Hydroxybutylvinylether, Maleinsäureanhydrid, Itaconsäureanhydrid entnommen sind.

10. Verfahren zur Herstellung einer Haftklebemasse nach einem der vorstehenden Ansprüche, umfassend
(a) Herstellen eines funktionalisierten Polymers nach einem oder mehreren der vorangehenden Ansprüche, **dadurch gekennzeichnet, dass** es durch ein kontrolliert-radikalisches, quasilebend-radikalisches oder lebend-radikalisches Polymerisationsverfahren hergestellt ist; und
(b) Vernetzen des funktionalisierten Polymers.

11. Verfahren nach Anspruch 10, **dadurch gekennzeichnet, dass** das funktionalisierte Polymer durch Zugabe eines Kopplungsreagenzes und optional weiterer Hilfssubstanzen wie Katalysatoren, Initiatoren oder Aktivatoren zu einer Kettenverlängerung und/oder Vernetzung gebracht wird.

12. Verfahren nach Anspruch 11, **dadurch gekennzeichnet, dass** die Kettenverlängerung und/oder Vernetzung durch Einfluss thermischer Energie und/oder aktinischer Strahlung initiiert wird.

13. Verfahren nach einem oder mehreren der Ansprüche 10 bis 12, **dadurch gekennzeichnet, dass** die eine Kettenverlängerungsreaktion und/oder Vernetzungsreaktion während und/oder nach der Beschichtung abläuft.

14. Selbstklebende Produkte, umfassend zumindest eine Haftklebemasse nach einem oder mehreren der Ansprüche 1 bis 9.

15. Selbstklebende Produkte, umfassend zumindest eine Haftklebemasse, erhalten nach einem oder mehreren der Ansprüche 10 bis 14.

## Claims

1. Pressure-sensitive adhesive obtainable by crosslinking a functionalized polymer, wherein the weight average of the molar mass distribution is situated between 5000 g/mol and 200 000 g/mol and the difference between Mₚ and Mₘᵢₙ is less than 25 000 g/mol, where
(a) Mₚ is the peak molar mass of a monomodal polymer or the peak molar mass of the smallest mode in a bimodal or multimodal polymer,
(b) Mₘᵢₙ is the smallest molar mass occurring in the molar mass distribution, defined on the basis of the point at which the cumulative frequency of the molar mass distribution has a value of 0.05,
(c) the functionalized polymer is linear, branched or star-shaped in structure,
(d) the functionalized polymer carries at least one kind of functionalization, which can be utilized for subsequent crosslinking of the functionalized polymer,
(e) at least 50% of the polymer chains of the functionalized polymer carry at least two functionalizations,
(f) at least 75% of the polymer chains of the functionalized polymer carry at least one functionalization; and
(g) the at least one kind of functionalization of the functionalized polymer results from the use of at least one variety of a functionalized monomer in the preparation of the functionalized polymer.

2. Pressure-sensitive adhesive obtainable by crosslinking a functionalized polymer which comprises at least one functionalized block copolymer, where, in the block copolymer, the weight average of the molar mass distribution is situated between 5000 g/mol and 200 000 g/mol and the difference between Mₚ and Mₘᵢₙ is less than 25 000 g/mol, where
(a) Mₚ is the peak molar mass of a monomodal block copolymer or the peak molar mass of the smallest mode in a bimodal or multimodal block copolymer,
(b) Mₘᵢₙ is the smallest molar mass occurring in the molar mass distribution, defined on the basis of the point at which the cumulative frequency of the molar mass distribution has a value of 0.05,
(c) the functionalized block copolymer is linear, branched, star-shaped or grafted in structure,
(d) at least one block of the functionalized block copolymer carries at least one kind of functionalization, which can be utilized for subsequent crosslinking of the functionalized block copolymer,
(e) at least 50% of at least one block of the block copolymer chains of the functionalized block copolymer carry at least two functionalizations,
(f) at least 75% of at least one block of the block copolymer chains of the functionalized block copolymer carry at least one functionalization,
(g) the at least one kind of functionalization of the functionalized block copolymer results from the use of at least one variety of a functionalized monomer in the preparation of the functionalized block copolymer.

3. Pressure-sensitive adhesive according to either of Claims 1 and 2, **characterized in that** the weight average of the molar mass distribution of the functionalized polymer or block copolymer is situated between 10 000 g/mol and 100 000 g/mol.

4. Pressure-sensitive adhesive according to one of the preceding claims, **characterized in that** the difference between Mₚ and Mₘᵢₙ is less than 15 000 g/mol.

5. Pressure-sensitive adhesive according to at least one of the preceding claims, **characterized in that** the functionalized polymer or block copolymer is prepared to an extent of more than 50%, preferably more than 75%, from (meth)acrylate monomers.

6. Pressure-sensitive adhesive according to one or more of the preceding claims, **characterized in that** the monomer mixture from which the functionalized polymer or block copolymer is obtained by polymerization contains up to 20%, preferably up to 10% and more preferably up to 5% of at least one kind of a functionalized monomer.

7. Pressure-sensitive adhesive according to one or more of the preceding claims, **characterized in that** the unfunctionalized monomers for preparing the functionalized polymers or block copolymers are taken from one or a combination of unfunctionalized α,β-unsaturated esters of the general structure
CH₂=C(R¹) ( COOR²)
where R¹ = H or CH₃ and R² = linear, branched or cyclic, saturated or unsaturated alkyl radicals having 1 to 30 carbon atoms, in particular having 4 to 18 carbon atoms.

8. Pressure-sensitive adhesive according to one or more of the preceding claims, **characterized in that** the functionalized monomers for preparing the functionalized polymers or block copolymers are taken from one or a combination of unfunctionalized α,β-unsaturated esters of the general structure
CH₂=C(R¹) (COOR³)
where R¹=H or CH₃ and R³=H or linear, branched or cyclic, saturated or unsaturated alkyl radicals having 1 to 30 carbon atoms, in particular having 4 to 18 carbon atoms, and containing at least one functional group which includes at least one atom that is different from carbon and from hydrogen.

9. Pressure-sensitive adhesive according to Claim 8, **characterized in that** the functionalized monomers when preparing the functionalized polymers or block copolymers are taken from one or a combination of functionalized α,β-unsaturated carbonyl compounds of the group consisting of acrylic acid, methacrylic acid, 2-hydroxyethyl acrylate, 2-hydroxyethyl methacrylate, 3-hydroxypropyl acrylate, 3-hydroxypropyl methacrylate, 4-hydroxybutyl acrylate, 4-hydroxybutyl methacrylate, itaconic acid, crotonic acid, acrylamide, methacrylamide, N-methylolacrylamide, N-methylolmethacrylamide, glycidyl acrylate, glycidyl methacrylate, vinyl alcohol, 2-hydroxyethyl vinyl ether, 3-hydroxypropyl vinyl ether, 4-hydroxybutyl vinyl ether, maleic anhydride and itaconic anhydride.

10. Process for preparing a pressure-sensitive adhesive according to one of the preceding claims, comprising
(a) preparation of a functionalized polymer according to one or more of the preceding claims, **characterized in that** it has been prepared by a controlled-growth, quasi-living or living, free-radical polymerization process; and
(b) crosslinking of the functionalized polymer.

11. Process according to Claim 10, **characterized in that** the functionalized polymer is brought to chain extension and/or crosslinking by addition of a coupling reagent and, optionally, of further auxiliary substances such as catalysts, initiators or activators.

12. Process according to Claim 11, **characterized in that** the chain extension and/or crosslinking is initiated by the influence of thermal energy and/or actinic radiation.

13. Process according to one or more of Claims 10 to 12, **characterized in that** the one chain extension reaction and/or crosslinking reaction takes place during and/or after coating.

14. Self-adhesive products, comprising at least one pressure-sensitive adhesive according to one or more of Claims 1 to 9.

15. Self-adhesive products, comprising at least one pressure-sensitive adhesive produced according to one or more of Claims 10 to 14

## Revendications

1. Matière autoadhésive, pouvant être obtenue par réticulation d'un polymère fonctionnalisé qui présente une moyenne en poids de la distribution de masse moléculaire comprise entre 5 000 g/mole et 200 000 g/mole et une différence entre Mₚ et Mₘᵢₙ inférieure à 25 000 g/mole,
dans laquelle
(a) Mₚ est la masse moléculaire maximale d'un polymère monomodal ou la masse moléculaire maximale du plus petit mode dans un polymère bimodal ou multimodal,
(b) Mₘᵢₙ est la masse moléculaire la plus faible apparaissant dans la distribution de masse moléculaire, définie en le point où la fréquence cumulée de la distribution de masse moléculaire a une valeur de 0,05,
(c) le polymère fonctionnalisé est à structure linéaire, ramifiée ou en étoile,
(d) le polymère fonctionnalisé porte au moins un type de fonctionnalisations qui peut être utilisé pour une réticulation ultérieure du polymère fonctionnalisé,
(e) au moins 50 % des chaînes polymères du polymère fonctionnalisé portent au moins deux fonctionnalisations,
(f) au moins 75 % des chaînes polymères du polymère fonctionnalisé portent au moins une fonctionnalisation ; et
(g) dans la préparation du polymère fonctionnalisé, ledit au moins un type de fonctionnalisation du polymère fonctionnalisé résulte de l'utilisation d'au moins une sorte d'un monomère fonctionnalisé.

2. Matière autoadhésive, pouvant être obtenue par réticulation d'un polymère fonctionnalisé qui comprend au moins un copolymère séquencé fonctionnalisé, le copolymère séquencé présentant une moyenne en poids de la distribution de masse moléculaire comprise entre 5 000 g/mole et 200 000 g/mole et une différence entre Mₚ et Mₘᵢₙ inférieure à 25 000 g/mole,
(a) Mₚ étant la masse moléculaire maximale d'un copolymère séquencé monomodal ou la masse moléculaire maximale du plus petit mode dans un copolymère séquencé bimodal ou multimodal,
(b) Mₘᵢₙ étant la masse moléculaire la plus faible apparaissant dans la distribution de masse moléculaire, définie en le point où la fréquence cumulée de la distribution de masse moléculaire a une valeur de 0,05,
(c) le copolymère séquencé fonctionnalisé étant à structure linéaire, ramifiée, en étoile ou greffée,
(d) au moins une séquence du copolymère séquencé fonctionnalisé portant au moins un type de fonctionnalisations qui peut être utilisé pour une réticulation ultérieure du copolymère séquencé fonctionnalisé,
(e) au moins 50 % d'au moins une séquence des chaînes de copolymère séquencé du copolymère séquencé fonctionnalisé portant au moins deux fonctionnalisations,
(f) au moins 75 % d'au moins une séquence des chaînes de copolymère séquencé du copolymère séquencé fonctionnalisé portant au moins une fonctionnalisation,
(g) dans la préparation du copolymère séquencé fonctionnalisé, ledit au moins un type de fonctionnalisation du copolymère séquencé fonctionnalisé résultant de l'utilisation d'au moins une sorte d'un monomère fonctionnalisé.

3. Matière autoadhésive selon l'une quelconque des revendications 1 et 2, **caractérisée en ce que** la moyenne en poids de la distribution de masse moléculaire du polymère ou copolymère séquencé fonctionnalisé est comprise entre 10 000 g/mole et 100 000 g/mole.

4. Matière autoadhésive selon l'une quelconque des revendications précédentes, **caractérisée en ce que** la différence entre Mₚ et Mₘᵢₙ est inférieure à 15 000 g/mole.

5. Matière autoadhésive selon au moins l'une des revendications précédentes, **caractérisée en ce que** le polymère ou copolymère séquence fonctionnalisé est préparé à raison de plus de 50 %, de préférence de plus de 75 %, à partir de monomères (méth)acrylate.

6. Matière autoadhésive selon une ou plusieurs des revendications précédentes, **caractérisée en ce que** le mélange de monomères à partir duquel le polymère ou copolymère séquencé est obtenu par polymérisation contient, à raison de jusqu'à 20 %, de préférence à raison de jusqu'à 10%, encore mieux à raison de jusqu'à 5 %, au moins une sorte d'un monomère fonctionnalisé.

7. Matière autoadhésive selon une ou plusieurs des revendications précédentes, **caractérisée en ce que** dans la préparation des polymères ou copolymères séquencés fonctionnalisés, les monomères non fonctionnalisés sont issus d'un ou d'une association d'esters α,β-insaturés non fonctionnalisés, de structure générale
CH₂=C (R¹) (COOR²)
où R¹ = H ou CH₃ et R² représente des radicaux alkyle linéaires, ramifiés ou cycliques, saturés ou insaturés, ayant de 1 à 30, en particulier de 4 à 18 atomes de carbone.

8. Matière autoadhésive selon une ou plusieurs des revendications précédentes, **caractérisée en ce que** dans la préparation des polymères ou copolymères séquencés fonctionnalisés, les monomères fonctionnalisés sont issus d'un ou d'une association d'esters α,β-insaturés non fonctionnalisés, de structure générale
CH₂=C (R¹) (COOR³)
où R¹ = H ou CH₃ et R³ représente H ou des radicaux alkyle linéaires, ramifiés ou cycliques, saturés ou insaturés, ayant de 1 à 30, en particulier de 4 à 18 atomes de carbone et contient au moins un groupe fonctionnel qui comporte au moins un atome qui est différent d'un atome de carbone et d'un atome d'hydrogène.

9. Matière autoadhésive selon la revendication 8, **caractérisée en ce que** dans la préparation des polymères ou copolymères séquencés fonctionnalisés, les monomères fonctionnalisés sont issus d'un ou d'une association de composés carbonyle α,β-insaturés fonctionnalisés, choisis dans le groupe constitué par l'acide acrylique, l'acide méthacrylique, l'acrylate de 2-hydroxyéthyle, le méthacrylate de 2-hydroxyéthyle, l'acrylate de 3-hydroxypropyle, le méthacrylate de 3-hydroxypropyle, l'acrylate de 4-hydroxybutyle, le méthacrylate de 4-hydroxybutyle, l'acide itaconique, l'acide crotonique, l'acrylamide, le méthacrylamide, le N-méthylolacrylamide, le N-méthylolméthacrylamide, l'acrylate de glycidyle, le méthacrylate de glycidyle, l'alcool vinylique, l'éther 2-hydroxyéthylvinylique, l'éther 3-hydroxypropylvinylique, l'éther 4-hydroxy-butylvinylique, l'anhydride maléique, l'anhydride itaconique.

10. Procédé pour la production d'une matière autoadhésive selon l'une quelconque des revendications précédentes, comprenant
(a) la préparation d'un polymère fonctionnalisé selon une ou plusieurs des revendications précédentes, **caractérisé en ce qu'**on le prépare par un procédé de polymérisation radicalaire contrôlée, radicalaire quasi-vivante, ou radicalaire vivante ; et
(b) la réticulation du polymère fonctionnalisé.

11. Procédé selon la revendication 10, **caractérisé en ce qu'**on soumet le polymère fonctionnalisé à un prolongement de chaîne et/ou à une réticulation par addition d'un réactif de couplage et en option d'autres substances auxiliaires telles que des catalyseurs, des amorceurs ou des activateurs.

12. Procédé selon la revendication 11, **caractérisé en ce qu'**on amorce le prolongement de chaîne et/ou la réticulation sous l'effet d'énergie thermique et/ou d'un rayonnement actinique.

13. Procédé selon une ou plusieurs des revendications 10 à 12, **caractérisé en ce qu'**une réaction de prolongement de chaîne et/ou une réaction de réticulation se déroule pendant et/ou après l'enduction.

14. Produits autoadhésifs, comprenant au moins une matière autoadhésive selon une ou plusieurs des revendications 1 à 9.

15. Produits autoadhésifs, comprenant au moins une matière autoadhésive obtenue selon une ou plusieurs des revendications 10 à 14.
